# EUROPEAN PATENT SPECIFICATION

(11) **EP 3 049 655 B1**
(45) Date of publication and mention of the grant of the patent: **01.12.2021**
(21) Application number: 14845485.3
(22) Date of filing: 23.09.2014
(51) Int. Cl.: F02C 7/06, F01D 25/16, F01D 25/24

(54) **GAS TURBINE ENGINE BEARING ARRANGEMENT TRANSLATING RADIAL VIBRATIONS INTO AXIAL VIBRATIONS**
LAGERANORDNUNG FÜR EINEN GASTURBINENMOTOR, DIE RADIALVIBRATIONEN IN AXIALVIBRATIONEN VERWANDELT
AGENCEMENT DE PALIER DE TURBINE À GAZ TRANSFORMANT DES VIBRATIONS RADIALES EN VIBRATIONS AXIALES

(30) Priority: 23.09.2013 US 201314033652
(43) Date of publication of application: 03.08.2016
(73) Proprietor: Raytheon Technologies Corporation, Farmington, CT 06032 (US)
(72) Inventor: SAVELA, Gregory M., Amston, Connecticut 06231 (US)
(74) Representative: Dehns
(86) International application number: PCT/US2014/056880
(87) International publication number: WO 2015/042553

(56) References cited:
- US-A- 4 872 767
- US-A1- 2005 254 945
- US-A1- 2006 201 160
- US-A1- 2012 328 431
- US-A1- 2013 108 440
- US-B2- 7 802 962
- US-B2- 7 802 962
- None

## Description

### BACKGROUND

This disclosure relates to a bearing arrangement for a gas turbine engine.

A typical jet engine has two or three spools, or shafts, that transmit torque between the turbine and compressor sections of the engine. Each of these spools is typically supported by two bearings. One bearing, for example, a ball bearing, may be arranged at a forward end of the spool and be configured to react to both axial and radial loads. Another bearing, for example, a roller bearing or journal bearing may be arranged at the aft end of the spool and be configured to react only to radial loads. This bearing arrangement typically fully constrains the shaft except for rotation, and axial movement of one free end is permitted to accommodate engine axial growth.

US 7,802,962 B2 discloses a prior art bearing hub in accordance with the preamble of claim 1, and a prior art method in accordance with the preamble of claim 15.

US 4,872,767 discloses a prior art bearing support.

### SUMMARY

In accordance with a first aspect of the present invention, there is provided a bearing hub as set forth in claim 1.

In an embodiment of the foregoing bearing hub, the translation flange arm extends axially aftward from the apex of the unitary structure.

In a further embodiment of the foregoing bearing hub, a focal node of radial vibrations of the bearing hub is the first bearing.

In a further embodiment of the foregoing bearing hub, the spring arm is rigidly connected to the apex.

According to a further aspect of the present invention, there is provided a gas turbine engine as set forth in claim 5.

In an embodiment of the foregoing gas turbine engine, the translation flange arm extends axially aftward from the apex of the unitary structure.

In a further embodiment of the foregoing gas turbine engine, the translation flange is received in an annular cavity supported by the canted annular flange.

In a further embodiment of the foregoing gas turbine engine, the annular cavity includes an axial vibration damper.

In a further embodiment of the foregoing gas turbine engine, the axial vibration damper includes at least a first wire mesh structure disposed between the translation flange and a first wall of the annular cavity.

In a further embodiment of the foregoing gas turbine engine, the axial vibration damper includes at least a second wire mesh structure disposed between the translation flange and a second wall of the annular cavity.

In a further embodiment of the foregoing gas turbine engine, the axial vibration damper includes at least a first seal defining a damping annulus within the annular cavity.

A further embodiment of the foregoing gas turbine engine includes a damping fluid disposed within the damping annulus.

In a further embodiment of the foregoing gas turbine engine, the damping fluid is damping oil.

In a further embodiment of the foregoing gas turbine engine, the axial vibration damper includes at least a second seal further defining the damping annulus.

In a further embodiment of the foregoing gas turbine engine, the seal is one of an elastomeric O-ring seal and a piston ring.

In a further embodiment of the foregoing gas turbine engine, the second turbine section is a low pressure turbine, and the low pressure turbine is configured to have a pressure ratio that is greater than about 5:1.

According to a further aspect of the present invention, there is provided a method as set forth in claim 15.

The foregoing features and elements may be combined in any combination without exclusivity, unless expressly indicated otherwise.

### BRIEF DESCRIPTION OF THE DRAWINGS

The disclosure can be further understood by reference to the following detailed description when considered in connection with the accompanying drawings.
Figure 1 schematically illustrates an example gas turbine engine.
Figure 2 is another schematic view of the gas turbine engine illustrating an example bearing arrangement.
Figure 3 is a more detailed schematic view of an aft bearing arrangement illustrated in Figure 2.
Figure 4 schematically illustrates a more detailed alternative example of the aft bearing arrangement illustrated in Figure 2.
Figure 5 schematically illustrates a first damping annulus for the alternative example aft bearing arrangement of Figure 4.
Figure 6 schematically illustrates a second damping annulus for the alternative example aft bearing arrangement of Figure 4.

### DETAILED DESCRIPTION

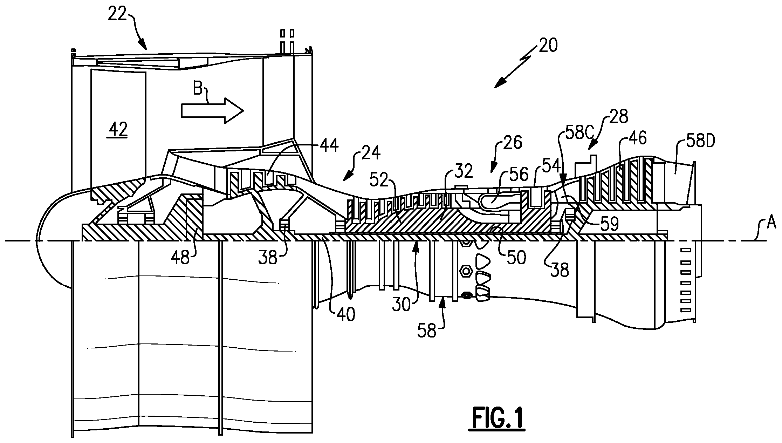

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure or housing 58 via several bearing systems 38. It should be understood that various bearing systems 38 at various locations may alternatively or additionally be provided. The housing 58 includes first, second, third, and fourth housing portions 58A, 58B, 58C, 58D. The third and fourth housing portions 58C, 58D respectively correspond to a mid-turbine frame and a turbine exhaust case.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The mid-turbine frame 58C of the engine static structure 36 is arranged generally between the high pressure turbine 54 and the low pressure turbine 46. The mid-turbine frame 58C supports one or more bearing systems 38 in the turbine section 28. The turbine exhaust case 58D is arranged downstream from the low pressure turbine 46 and may support one or more bearing systems as well. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 is, in one example, a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Temperature ambient deg Rankine) / 518.7)^0.5] (where Rankine = K x 9/5). The "Low corrected fan tip speed" as disclosed herein according to one non-limiting embodiment is less than about 1150 ft / second (350.5 m/s).

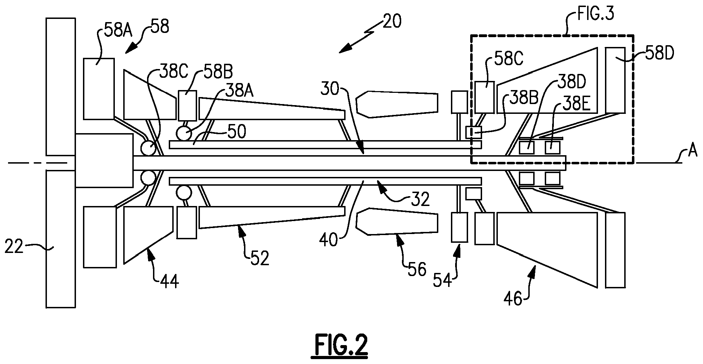

An example bearing arrangement for the gas turbine engine 20 is schematically depicted in Figure 2. The low speed spool 30 extends axially between forward and aft ends, with the aft end extending beyond the high speed spool 32. The high speed spool 32 is supported for rotation by first and second bearings 38A, 38B. In one example, the first bearing 38A is of a type that may react to both axial and radial loads, such as a ball bearing. The second bearing 38B is of a type that reacts to radial loads, such as a roller bearing or a journal bearing. The low speed spool 30 is supported by first, second and third bearings 38C, 38D, 38E. The first bearing 38C is of a type that reacts to both axial and radial loads. The second and third bearings 38D, 38E are of a type that reacts to radial loads. The second and third bearings 38D, 38E support an aft end of the low speed spool 30.

The low speed spool 30 has a higher length/diameter (L/D) ratio than the high speed spool 32. From a rotor dynamics standpoint, a shaft will reach a critical speed of instability at a lower speed as the L/D ratio gets larger. Providing at least two bearings at the aft end of the low speed spool 30 increases the critical speed of the low speed spool 30, which enables higher overall engine speeds and lower weight thereby allowing the engine 20 to be faster and smaller for a given level of thrust.

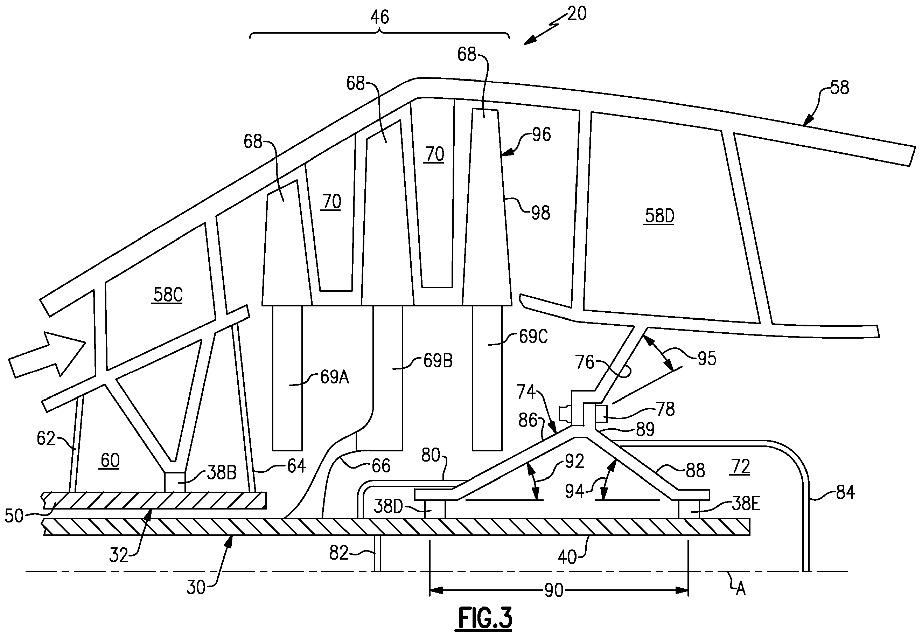

Figure 3 illustrates a more detailed view of the engine 20 shown in Figure 2. The second bearing 38B supporting the low speed spool 30 is arranged within a first bearing compartment 60. The first bearing compartment 60 is provided by first and second walls 62, 64, which are sealed relative to the third housing portion 16C and the second spool 30.

The low pressure turbine 46 includes a low pressure turbine rotor hub 66 secured to the low speed spool 30. The low pressure turbine rotor hub 66 supports multiple low pressure turbine blades 68 in one example. Low pressure turbine stator vanes 70 are provided between the low pressure turbine blades 68 and supported by the housing 16. The low pressure turbine rotor hub 66 is canted in an aft direction, which accommodates a second bearing compartment 72. The second and third bearings 38D, 38E are arranged within the second bearing compartment 72, which is provided by first and second walls 80, 82 and a cover 84, for example. The cover 74 is removably secured over the aft end and encloses the second and third bearings 38D, 38E.

In the example, the turbine exhaust case 58D includes a radially rearward canted annular flange 76, which removably supports a hub 74 secured to the flange 76 by fasteners 78. The hub 74 includes first and second hub walls 86, 88 canted toward one another in opposite directions and adjoining one another at an annular apex 89 provided near the flange 76 in the example shown. According to the invention, the first and second hub walls 86, 88 provide an integrated, unitary structure. Each of the first and second hub walls 86, 88 supports one of the second and third bearings 38D, 38E. The aft-canted low pressure turbine rotor hub 66 accommodates at least the second bearing 38D and a portion of the first hub wall 86 is arranged radially beneath the low pressure turbine 46 such that axial length need not be added to the low speed spool 30. The second bearing 38D is arranged axially forward of an aft side 98 of a last rotor stage 96.

In one example, the second and third bearings 38D, 38E are spaced apart from one another a span 90 that is approximately 4-12 inches (10-30cm), for example. In one example, the first hub wall is oriented at a first angle 92 of between about 30° and about 60°, and the second hub wall 88 is oriented at a second angle 94 of between about 30° and about 60°. The annular flange 76 is oriented relative to the first hub wall 86 at a third angle 95 of between about 0° and about 30°, for example. In one example, the first angle 90 is about 45° and the third angle 95 is about 0°. The above values are exemplary for one example engine design.

The multiple turbine rotors include first, second and third turbine rotors 69A, 69B, 69C. The third turbine rotor is part of the last rotor stage 96. The first turbine rotor 69A corresponds to a forward-most rotor stage. The second turbine rotor 69B is arranged axially between the first and third rotors 69A, 69C. The low pressure turbine rotor hub 66 is mounted on the low speed spool 30 and is secured to the second turbine hub 69B for supporting the low pressure turbine 46. In one example, the bearing hub 74 includes a moment stiffness of about 80,000,000 in-lb/rad (9,144,000 cm-kg/rad), for example, and a lateral stiffness of about 5,000,000 lb/in (886,000 kg/cm).

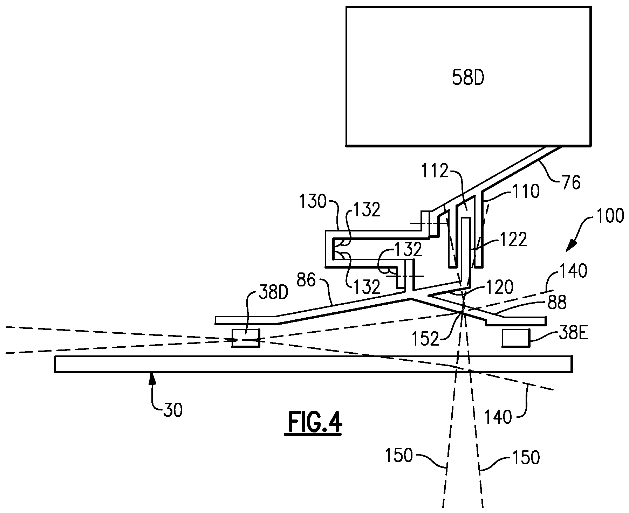

With continued reference to Figures 1-3, and with like numerals indicating like elements, Figure 4 schematically illustrates a more detailed alternative example of the aft bearing arrangement illustrated in Figure 2. The alternate aft bearing arrangement 100 of Figure 4 includes an annular cavity 112 defined by annulus walls 110. The annulus walls 110 are supported by the radially rearward canted annular flange 76.

A radial to axial translation flange arm 120 extends from the apex defined by the first and second hub walls 86, 88 and supports a radial to axial translation flange 122. Also connecting the apex of the first and second hub walls 86, 88 to the radially rearward canted annular flange 76 is a spring arm 130. The spring arm 130 has multiple flex points 132 that cooperate to convert radial vibrations 140 in the aft bearing arrangement 100 into axial vibrations 150 in the radial to axial translation flange 122.

During operation of the turbine engine, the aft bearing arrangement 100 vibrates about the second bearing 38D connecting the aft bearing arrangement 100 to the low speed spool 30. Due to the design of the aft bearing arrangement 100, the second bearing 38D is the focal node of the aft bearing radial vibrations 140 (illustrated by dashed lines). The illustrated radial vibrations 140 are exaggerated for illustrative effect.

The spring arm 130 operates cooperatively with the radially rearward canted annular flange 76 to convert the radial vibrations 140 into axial vibrations 150 (illustrated by dashed lines) by flexing at the flex points 132 and along the longitudinal cylinders comprising the spring arm 130. The axial vibrations 150 have a focal node 152 centered in the second hub wall 88. In alternate examples, the focal node of the axial vibrations 150 can be located anywhere radially aligned with the illustrated focal node 152, as dictated by the design of the spring arm 130.

The magnitude of the axial vibrations 150 and the amount of translation from the radial vibrations 140 to the axial vibrations 150 is directly related to the stiffness of the spring arm 130. One of skill in the art, having the benefit of this disclosure, can adjust the amount of radial vibrations 140 translated into axial vibrations 150 by adjusting the stiffness of the spring arm 130. In a practical embodiment, the spring arm 130 stiffness is adjusted during engine design and a spring arm 130 having a fixed spring stiffness of the determined stiffness is utilized in the actual assembly.

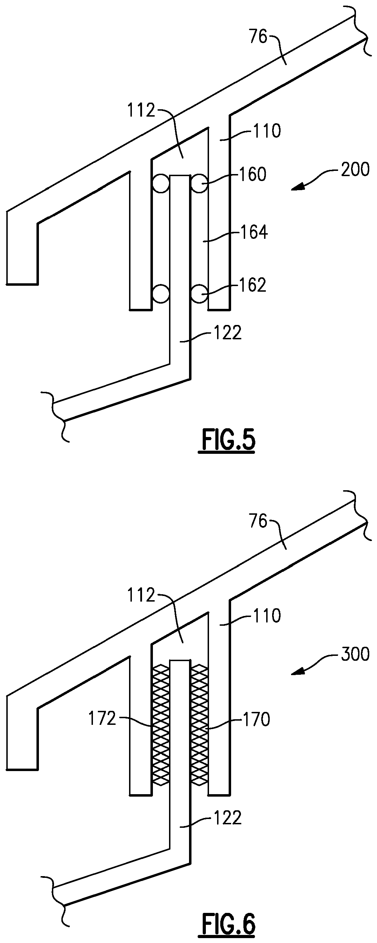

Once the radial vibrations 140 are translated into axial vibrations 150, the vibrations 150 are damped via an axial vibration damper positioned within the annular cavity 112. With continued reference to Figures 1-4, and with like numerals indicating like elements, Figure 5 illustrates a first example axial vibration damping arrangement 200 positioned within the annular cavity 112. The radial to axial translation flange 122 is received in the annular cavity 112 and a pair of seals 160, 162 creates a damping annulus 164 within the annular cavity 112. In one example, the seals 160, 162 are elastomeric O-ring seals. In an alternate example, the seals 160, 162 are a non-elastomeric seal, such as a piston ring. A fluid, such as oil, is received within the damping annulus 164 and dampens the axial vibrations 150 by axially compressing and decompressing as the radial to axial translation flange 122 vibrates.

With continued reference to Figures 1-4, and with like numerals indicating like elements, Figure 6 illustrates an alternate axial damping arrangement 300 for the aft bearing arrangement illustrated in Figure 2. As with the axial damping arrangement 200 of Figure 5, the radial to axial translation flange 122 is received in the annular cavity 112 defined by the annulus walls 110. Instead of a fluid filled damping annulus 164 defined by a pair of seals, the radial to axial flange 122 is received between a pair of metal mesh dampers 170, 172. As the radial to axial flange 122 vibrates axially, the metal mesh dampers 170, 172 compress and decompress, thereby damping the vibration of the aft bearing arrangement, and reducing the negative impact of vibrations. The amount of damping provided by the metal mesh dampers 170, 172 can also be adjusted by adjusting the stiffness of the metal mesh dampers 170, 172.

With continued reference to Figures 1-6, utilization of the aft bearing arrangement 100 allows the trunnion bearings to be spaced closer than conventional trunnion bearings, as the axial vibration damping has a greater damping effect. Similarly, while the above examples are described with regards to an aft bearing arrangement, the disclosed structure can be adapted to other radial damping bearing arrangements by one skilled in the art having the benefit of this disclosure in order to replace the radial damping with axial damping, or, alternatively, to augment existing radial damping.

Although example embodiments have been disclosed, a worker of ordinary skill in this art would recognize that certain modifications would come within the scope of the claims. For that reason, the following claims should be studied to determine their true scope and content.

## Claims

1. A bearing hub (74) for a gas turbine engine (20) comprising:
first and second hub walls (86, 88) integrally formed with one another to provide a unitary structure;
a radial to axial translation flange arm (120) extending from an apex of the unitary structure;
a translation flange (122) extending radially outward from said translation flange arm (120); and
a spring arm (130) connected to the apex for connecting the bearing hub (74) to a canted annular flange (76);
wherein the first and second hub walls (86, 88) are inclined radially inward from an annular apex, and a first and second bearing (38D, 38E) are respectively supported by the first and second walls (86,88) opposite the apex;
**characterised in that**:
the spring arm (130) comprises at least a first flex point (132), a second flex point (132), and a third flex point (132), and a stiffness of each of said flex points (132) is configured to determine an amount of radial vibrations translated to axial vibrations in the translation flange (122) by said bearing hub (74).

2. The bearing hub (74) of claim 1, wherein the translation flange arm (120) extends axially aftward from said apex of said unitary structure.

3. The bearing hub (74) of claim 1 or 2, wherein a focal node of radial vibrations of the bearing hub (74) is the first bearing (38D).

4. The bearing hub (74) of any preceding claim, wherein said spring arm (130) is rigidly connected to said apex.

5. A gas turbine engine (20) comprising:
a fan (42);
a compressor (24) fluidly connected to the fan (42), the compressor (24) comprising a first compressor section (52) and a second compressor section (44);
a combustor (26) fluidly connected to the compressor (24);
a turbine section (28) fluidly connected to the combustor (26), the turbine section (28) comprising:
a first turbine section (54) coupled to the first compressor section (52) via a shaft (50);
a second turbine section (46); and
the bearing hub (74) of claim 1 or 2, wherein the spring arm (130) connects the apex to a canted annular flange (76) of the turbine exhaust case (58D) and the apex is annular; wherein said translation flange (122) is received in an annular cavity (112) and is supported by the canted annular flange (76).

6. The gas turbine engine (20) of claim 5, wherein said annular cavity (112) includes an axial vibration damper (170, 172).

7. The gas turbine engine (20) of claim 5 or 6, wherein said axial vibration damper (170, 172) comprises at least a first wire mesh structure disposed between said translation flange (122) and a first wall (86) of said annular cavity (112).

8. The gas turbine engine (20) of claim 7, wherein said axial vibration damper (170, 172) comprises at least a second wire mesh structure disposed between said translation flange (122) and a second wall (88) of said annular cavity (112).

9. The gas turbine engine (20) of any of claims 5 to 8, wherein said axial vibration damper (170, 172) comprises at least a first seal (160) defining a damping annulus (164) within said annular cavity (112).

10. The gas turbine engine (20) of claim 9, further comprising a damping fluid disposed within said damping annulus (164).

11. The gas turbine engine (20) of claim 10, wherein said damping fluid is damping oil.

12. The gas turbine engine (20) of any of claims 9 to 11, wherein said axial vibration damper (170, 172) comprises at least a second seal (162) further defining the damping annulus (164).

13. The gas turbine engine (20) of any of claims 8to 12, wherein said seal (160, 162) is one of an elastomeric O-ring seal and a piston ring.

14. The gas turbine engine (20) of any of claims 5 to 13, wherein the second turbine section (46) is a low pressure turbine, and the low pressure turbine is configured to have a pressure ratio that is greater than 5:1.

15. A method for damping vibrations in a bearing hub (74) comprising the steps of:
converting radial vibrations in said bearing hub (74) to axial vibrations using a spring arm (130) and a radial to axial vibration translation flange (122);
damping axial vibrations of said radial to axial vibration translation flange (122) using an axial vibration damper (170, 172);
wherein the first and second hub walls (86, 88) are inclined radially inward from an annular apex, and a first and second bearing (38D, 38E) are respectively supported by the first and second walls (86,88) opposite the apex;
**characterised in that**:
the spring arm (130) comprises at least a first flex point (132), a second flex point (132), and a third flex point (132), and a stiffness of each of said flex points (132) is configured to determine an amount of radial vibrations translated to axial vibrations in the translation flange (122) by said bearing hub (74), and the method further comprises the step of adjusting a level of vibrational damping by adjusting a stiffness of the spring arm (130).

## Patentansprüche

1. Lagernabe (74) für ein Gasturbinentriebwerk (20), die Folgendes umfasst:
eine erste und eine zweite Nabenwand (86, 88), die integral miteinander gebildet sind, um eine einstückige Struktur bereitzustellen;
einen Flanscharm (120) für Radial-zu-axial-Verwandlung, der sich von einem Scheitelpunkt der einstückigen Struktur erstreckt;
einen Verwandlungsflansch (122), der sich radial nach außen von dem Verwandlungsflanscharm (120) erstreckt; und
einen Federarm (130), der mit dem Scheitelpunkt verbunden ist, zum Verbinden der Lagernabe (74) mit einem abgeschrägten ringförmigen Flansch (76);
wobei die erste und die zweite Nabenwand (86, 88) radial nach innen von dem ringförmigen Scheitelpunkt geneigt sind und ein erstes und ein zweites Lager (38D, 38E) jeweils durch die erste und die zweite Wand (86, 88) gegenüber dem Scheitelpunkt gestützt sind;
**dadurch gekennzeichnet, dass**:
der Federarm (130) mindestens eine erste Biegestelle (132), eine zweite Biegestelle (132) und eine dritte Biegestelle (132) umfasst und eine Steifheit der Biegestellen (132) dazu konfiguriert ist, ein Ausmaß an radialen Vibrationen zu bestimmen, die durch die Lagernabe (74) in dem Verwandlungsflansch (122) in axiale Vibrationen umgewandelt werden.

2. Lagernabe (74) nach Anspruch 1, wobei sich der Verwandlungsflanscharm (120) axial nach hinten von dem Scheitelpunkt der einstückigen Struktur erstreckt.

3. Lagernabe (74) nach Anspruch 1 oder 2, wobei ein Fokusknoten von radialen Vibrationen der Lagernabe (74) das erste Lager (38D) ist.

4. Lagernabe (74) nach einem der vorhergehenden Ansprüche, wobei der Federarm (130) fest mit dem Scheitelpunkt verbunden ist.

5. Gasturbinentriebwerk (20), das Folgendes umfasst:
einen Lüfter (42);
einen Verdichter (24), der fluidisch mit dem Lüfter (42) verbunden ist, wobei der Verdichter (24) einen ersten Verdichtungsabschnitt (52) und einen zweiten Verdichtungsabschnitt (44) umfasst;
eine Brennkammer (26), die fluidisch mit dem Verdichter (24) verbunden ist;
einen Turbinenabschnitt (28), der fluidisch mit dem Verdichter (26) verbunden ist, wobei der Turbinenabschnitt (28) Folgendes umfasst:
einen ersten Turbinenabschnitt (54), der über eine Welle (50) an den ersten Verdichterabschnitt (52) gekoppelt ist;
einen zweiten Turbinenabschnitt (46); und
die Lagernabe (74) nach Anspruch 1 oder 2, wobei der Federarm (130) den Scheitelpunkt mit einem abgeschrägten ringförmigen Flansch (76) des Turbinenabgasgehäuses (58D) verbindet und der Scheitelpunkt ringförmig ist;
wobei der Verwandlungsflansch (122) in einem ringförmigen Hohlraum (112) aufgenommen ist und durch den abgeschrägten ringförmigen Flansch (76) gestützt ist.

6. Gasturbinentriebwerk (20) nach Anspruch 5, wobei der ringförmige Hohlraum (112) einen axialen Vibrationsdämpfer (170, 172) beinhaltet.

7. Gasturbinentriebwerk (20) nach Anspruch 5 oder 6, wobei der axiale Vibrationsdämpfer (170, 172) mindestens eine erste Drahtgitterstruktur umfasst, die zwischen dem Verwandlungsflansch (122) und einer ersten Wand (86) des ringförmigen Hohlraums (112) angeordnet ist.

8. Gasturbinentriebwerk (20) nach Anspruch 7, wobei der axiale Vibrationsdämpfer (170, 172) mindestens eine zweite Drahtgitterstruktur umfasst, die zwischen dem Verwandlungsflansch (122) und einer zweiten Wand (88) des ringförmigen Hohlraums (112) angeordnet ist.

9. Gasturbinentriebwerk (20) nach einem der Ansprüche 5 bis 8, wobei der axiale Vibrationsdämpfer (170, 172) mindestens eine erste Dichtung (160) umfasst, die einen Dämpfungsring (164) innerhalb des ringförmigen Hohlraums (112) definiert.

10. Gasturbinentriebwerk (20) nach Anspruch 9, der ferner ein Dämpfungsfluid umfasst, das innerhalb des Dämpfungsrings (164) angeordnet ist.

11. Gasturbinentriebwerk (20) nach Anspruch 10, wobei das Dämpfungsfluid Dämpfungsöl ist.

12. Gasturbinentriebwerk (20) nach einem der Ansprüche 9 bis 11, wobei der axiale Vibrationsdämpfer (170, 172) mindestens eine zweite Dichtung (162) umfasst, die den Dämpfungsring (164) ferner definiert.

13. Gasturbinentriebwerk (20) nach einem der Ansprüche 8 bis 12, wobei die Dichtung (160, 162) eine von einer elastomeren O-Ringdichtung und einem Kolbenring ist.

14. Gasturbinentriebwerk (20) nach einem der Ansprüche 5 bis 13, wobei der zweite Turbinenabschnitt (46) eine Niederdruckturbine ist und wobei die Niederdruckturbine dazu konfiguriert ist, ein Druckverhältnis aufzuweisen, das größer als 5:1 ist.

15. Verfahren zum Dämpfen von Vibrationen in einer Lagernabe (74), das die folgenden Schritte umfasst:
Umwandeln der radialen Vibrationen in der Lagernabe (74) in axiale Vibrationen unter Verwendung eines Federarms (130) und eines Verwandlungsflansches (122) für Radial-zu-axial-Vibration;
Dämpfen der axialen Vibrationen des Verwandlungsflansches (122) für Radial-zu-axial-Vibration unter Verwendung eines Axialvibrationsdämpfers (170; 172);
wobei die erste und die zweite Nabenwand (86, 88) radial nach innen von einem ringförmigen Scheitelpunkt geneigt sind und ein erstes und ein zweites Lager (38D, 38E) jeweils durch die erste und die zweite Wand (86, 88) gegenüber des Scheitelpunkts gestützt sind;
**dadurch gekennzeichnet, dass**:
der Federarm (130) mindestens eine erste Biegestelle (132), eine zweite Biegestelle (132) und eine dritte Biegestelle (132) umfasst und eine Steifheit von jeder der Biegestellen (132) dazu konfiguriert ist, ein Ausmaß an radialen Vibrationen zu bestimmen, die in dem Verwandlungsflansch (122) durch die Lagernabe (74) in axiale Vibrationen umgewandelt werden, und wobei das Verfahren ferner den Schritt des Einstellens eines Pegels von Vibrationsdämpfung durch Einstellen einer Steifheit des Federarms (130) umfasst.

## Revendications

1. Moyeu de palier (74) pour une turbine à gaz (20) comprenant :
des première et seconde parois de moyeu (86, 88) formées d'un seul tenant l'une avec l'autre pour fournir une structure unitaire ;
un bras de bride de translation radiale à axiale (120) s'étendant depuis un sommet de la structure unitaire ;
une bride de translation (122) s'étendant radialement vers l'extérieur à partir dudit bras de bride de translation (120) ; et
un bras à ressort (130) relié au sommet pour relier le moyeu de palier (74) à une bride annulaire inclinée (76) ;
dans lequel les première et seconde parois de moyeu (86, 88) sont inclinées radialement vers l'intérieur à partir d'un sommet annulaire, et un premier et un second palier (38D, 38E) sont respectivement supportés par les première et seconde parois (86, 88) à l'opposé du sommet ;
**caractérisé en ce que** :
le bras à ressort (130) comprend au moins un premier point de flexion (132), un deuxième point de flexion (132) et un troisième point de flexion (132), et une rigidité de chacun desdits points de flexion (132) est configurée pour déterminer une quantité de vibrations radiales transformées en vibrations axiales dans la bride de translation (122) par ledit moyeu de palier (74).

2. Moyeu de palier (74) selon la revendication 1, dans lequel le bras de bride de translation (120) s'étend axialement vers l'arrière à partir dudit sommet de ladite structure unitaire.

3. Moyeu de palier (74) selon la revendication 1 ou 2, dans lequel un nœud focal de vibrations radiales du moyeu de palier (74) est le premier palier (38D).

4. Moyeu de palier (74) selon une quelconque revendication précédente, dans lequel ledit bras à ressort (130) est relié de manière rigide audit sommet.

5. Turbine à gaz (20) comprenant :
une soufflante (42) ;
un compresseur (24) relié fluidiquement à la soufflante (42), le compresseur (24) comprenant une première section de compresseur (52) et une seconde section de compresseur (44) ;
une chambre de combustion (26) reliée fluidiquement au compresseur (24) ;
une section de turbine (28) reliée fluidiquement à la chambre de combustion (26), la section de turbine (28) comprenant :
une première section de turbine (54) couplée à la première section de compresseur (52) via un arbre (50) ;
une seconde section de turbine (46) ; et
le moyeu de palier (74) selon la revendication 1 ou 2, dans laquelle le bras à ressort (130) relie le sommet à une bride annulaire inclinée (76) du carter d'échappement de turbine (58D) et le sommet est annulaire ;
dans laquelle ladite bride de translation (122) est reçue dans une cavité annulaire (112) et est supportée par la bride annulaire inclinée (76).

6. Turbine à gaz (20) selon la revendication 5, dans laquelle ladite cavité annulaire (112) comporte un amortisseur de vibrations axiales (170, 172).

7. Turbine à gaz (20) selon la revendication 5 ou 6, dans laquelle ledit amortisseur de vibrations axiales (170, 172) comprend au moins une première structure en treillis métallique disposée entre ladite bride de translation (122) et une première paroi (86) de ladite cavité annulaire. (112).

8. Turbine à gaz (20) selon la revendication 7, dans laquelle ledit amortisseur de vibrations axiales (170, 172) comprend au moins une seconde structure en treillis métallique disposée entre ladite bride de translation (122) et une seconde paroi (88) de ladite cavité annulaire (112).

9. Turbine à gaz (20) selon l'une quelconque des revendications 5 à 8, dans laquelle ledit amortisseur de vibrations axiales (170, 172) comprend au moins un premier joint d'étanchéité (160) définissant un anneau d'amortissement (164) à l'intérieur de ladite cavité annulaire (112).

10. Turbine à gaz (20) selon la revendication 9, comprenant en outre un fluide d'amortissement disposé à l'intérieur dudit anneau d'amortissement (164).

11. Turbine à gaz (20) selon la revendication 10, dans laquelle ledit fluide d'amortissement est de l'huile d'amortissement.

12. Turbine à gaz (20) selon l'une quelconque des revendications 9 à 11, dans laquelle ledit amortisseur de vibrations axiales (170, 172) comprend au moins un second joint d'étanchéité (162) définissant en outre l'anneau d'amortissement (164).

13. Turbine à gaz (20) selon l'une quelconque des revendications 8 à 12, dans laquelle ledit joint d'étanchéité (160, 162) est l'un d'un joint torique en élastomère et d'un segment de piston.

14. Turbine à gaz (20) selon l'une quelconque des revendications 5 à 13, dans laquelle la seconde section de turbine (46) est une turbine basse pression, et la turbine basse pression est configurée pour avoir un rapport de pression supérieur à 5:1.

15. Procédé pour amortir les vibrations dans un moyeu de palier (74) comprenant les étapes :
de conversion des vibrations radiales dans ledit moyeu de palier (74) en vibrations axiales à l'aide d'un bras à ressort (130) et d'une bride de translation de vibrations radiales à axiales (122) ;
d'amortissement des vibrations axiales de ladite bride de translation de vibrations radiales à axiales (122) à l'aide d'un amortisseur de vibrations axiales (170, 172) ;
dans lequel les première et seconde parois de moyeu (86, 88) sont inclinées radialement vers l'intérieur à partir d'un sommet annulaire, et un premier et un second palier (38D, 38E) sont respectivement supportés par les première et seconde parois (86, 88) à l'opposé du sommet ;
**caractérisé en ce que** :
le bras à ressort (130) comprend au moins un premier point de flexion (132), un deuxième point de flexion (132) et un troisième point de flexion (132), et une rigidité de chacun desdits points de flexion (132) est configurée pour déterminer une quantité de vibrations radiales traduites en vibrations axiales dans la bride de translation (122) par ledit moyeu de palier (74), et le procédé comprend en outre l'étape de réglage d'un niveau d'amortissement des vibrations en réglant une rigidité du bras à ressort (130).
